# EUROPEAN PATENT APPLICATION

(11) **EP 3 263 949 A1**
(43) Date of publication of application: **03.01.2018**
(21) Application number: 15883439.0
(22) Date of filing: 20.03.2015
(51) Int. Cl.: F16H 1/28

(54) **ADJUSTABLE SPEED GEAR APPARATUS**

(30) Priority: 27.02.2015 KR 20150027731
(71) Applicant: FXGEAR Co., Ltd., Changwon-si, Gyeongsangnam-do 641-969 (KR)
(72) Inventor: PARK, Jung Kyun, Changwon-si Gyeongsangnam-do 641-824 (KR); SEO, Dal Won, Changwon-si Gyeongsangnam-do 641-873 (KR)
(74) Representative: Peters, Sebastian Martinus
(86) International application number: PCT/KR2015/002713
(87) International publication number: WO 2016/137051

(57) **Abstract**

Disclosed is an adjustable speed gear apparatus that is installed on the hub shaft of the rear wheel of a bicycle to increase the driving speed and moving distance of the bicycle by two or more times on the average by improving the internal structure thereof in such a way so as to strengthen the support force of a transmission gear and to increase the coupling force between components, and can make the bicycle compact and light by constituting the wheels and crank of the bicycle to be small in size. A plurality of latch stoppers are formed in the middle of the inner circumferential surface of a ring gear of the adjustable speed gear apparatus for a bicycle such that the latch stoppers are connected to each other so as to be directed toward one direction similar to saw-toothed wheels; gear tooth forms are formed on a side of the inner circumferential surface of the ring gear, which has a relatively large diameter; a plurality of planetary gears are disposed to be engaged with the gear tooth forms to revolve along the radial inner circumference of the ring gear; a sun gear is disposed between the planetary gears so as to be engaged with the planetary gears; a plurality of first latch insertion recesses are formed on a side of the radial outer circumferential surface of the sun gear; a first latch and a first latch spring are disposed in each of the first latch insertion recesses; and the first latch is disposed to be selectively stopped by the latch stoppers of the ring gear.

## Description

### TECHNICAL FIELD

The present invention relates to an adjustable speed gear apparatus for improving a travel speed, and more particularly, to an adjustable speed gear apparatus for bicycles capable of increasing the travel speed and travel distance of the bicycle by two times or more on average when installed on the rear wheel hub shaft of the bicycle and enabling compact and lightweight design of the bicycle through miniaturization of the bicycle wheels and the cranks, by improving the internal structure by enhancing supportability of a transmission gear and coupling between components.

### BACKGROUND ART

Generally, the basic principle of riding a bicycle is to transmit force applied by a foot of a person to a rear wheel through a pedal, a crank mechanism, and a chain. In recent years, bicycles that enable more efficient travel by changing gear ratio according to travel speed and condition have become popular.

As a structure for changing the transmission, a transmission apparatus having a multi-stage sprocket including different-diameter sprockets formed on one side of a crankshaft on which a pedal is installed or different-diameter sprockets formed on the driving wheel, which is a rear wheel, is employed to change the position of a chain, which is a power transmission medium, to change the place where the bicycle travels and improve travel speed.

As an example of the transmission apparatus may be an adjustable speed gear apparatus for a bicycle for improving a travel speed disclosed in Korean Utility Model No. 20-0453246 (registered on Apr. 08, 2011), which was granted to the applicant of this specification.

The acceleration apparatus 100 for a bicycle disclosed in the aforementioned utility model includes a sun gear 101 integrally provided on a center line of a hub shaft 12 on which a driving wheel of the bicycle is installed, and planetary gears 103 integrally formed on one side surface of a gear cover 106, engaged with the sun gear 101 and rotatably installed individually about a fixed shaft 104. A gear housing 108 penetrated by the hub shaft 12 is installed so as to accommodate one side of the hub bush 102. A ring gear 107 is provided on the radially inner surface of the gear housing 108 such that the planetary gear 103 is inscribed therein.

The adjustable speed gear apparatus for a bicycle configured as above may be applied to a typical bicycle traveling by means of a chain using only a pedal-side drive chain and a drive wheel-side chain gear or a small bicycle having a relatively small diameter wheel, to increase the efficient travel speed of the bicycle so that the user may be satisfied with the speed. In other words, as the speed is increased more than twice a speed which would be obtained by the same force required to rotate the pedal once, the bicycle user can conveniently operate the pedal with low effort.

Meanwhile, Korean Patent No. 10-1089683 (issued on November 29, 2011), which was granted to the applicant of this specification, discloses an improved speed adjustable apparatus for a bicycle.

The speed adjustable apparatus disclosed in this patent document includes a plurality of latch engagement parts 231 formed around the inner circumference of a transmission cover 230, a bearing insertion groove 232 provided around a central opening, a planetary gear carrier insertion groove 233 provided between the latch engagement part 231 and the bearing insertion groove 232, and a plurality of bearing balls 112 seated between the bearing insertion groove 232 and the planetary gear carrier insertion groove 233. A latch insertion groove 215 for accommodating a plurality of latches 211 is formed on the radially outer surface of a planetary gear carrier 210 inserted into the planetary gear carrier insertion groove 233. The latches 211 formed on the outer circumference of the planetary gear carrier 210, in which the sun gear 101 and the planetary gear 103 are rotatably installed, are resiliently fixed to the planetary gear carrier 210 by a latch spring 220 and are inserted into the latch hole 231 of the transmission cover 230 in an engaging manner such that when the user rotates the pedal of the bicycle, the latches spring 220 stretches such that the latch 211 facing in one direction is not separated concentrically outward. Thereby, smooth traveling is allowed.

However, in the adjustable speed gear apparatus for a bicycle disclosed in the above-mentioned patent document, support of the transmission gears may be weakened and coupling between the components may be deteriorated since the latch holes are formed in the transmission cover and the planetary gear carrier is separately arranged, and the gear engagement structure of the sun gear and the planetary gear is supported inside the transmission cover.

### DISCLOSURE

### TECHNICAL PROBLEM

Therefore, the present invention has been made in view of the above problems, and it is one object of the present invention to provide an adjustable speed gear apparatus for bicycles capable of increasing the travel speed and travel distance of the bicycle by two times or more on average when installed on the rear wheel hub shaft of the bicycle and enabling compact and lightweight design of the bicycle through miniaturization of the bicycle wheels and the crank, by improving the internal structure by enhancing support of a transmission gear and coupling between components.

### TECHNICAL SOLUTION

In order to solve the technical problems as described above, there is provided
an adjustable speed gear apparatus for a bicycle, including: a transmission body fastened to and fixed to a male screw portion of a hub shaft on which a driving wheel of the bicycle is installed and formed in multiple stages to have a diameter decreasing in one direction, a ring gear accommodated in the transmission body, a sun gear, a plurality of planetary gears and a transmission cover coupled to an outer side of the transmission body.

The ring gear is formed in multiple stages to correspond to a shape of the transmission body so as to be seated in the transmission body, a plurality of latch engagement parts is formed on a central inner circumferential surface of the ring gear and connected to each other so as to face in one direction like a toothed wheel, and a gear tooth is formed on one inner circumferential surface of the ring gear having a relatively large diameter, wherein the plurality of planetary gears is disposed to be engaged with the gear tooth so as to revolve along a radial inner diameter of the ring gear, and the sun gear is disposed at a center of the planetary gears so as to be engaged with the planetary gears, wherein a plurality of first latch insertion grooves is formed on one radially outer surface of the sun gear, wherein a first latch and a first latch spring are disposed in the first latch insertion grooves, and wherein the first latch is disposed to be selectively engaged with the latch engagement parts of the ring gear.

A radially inner diameter of the sun gear is provided with a female screw portion to be screw-coupled with the male screw portion of the hub shaft.

A latch body and a ring stopper are sequentially provided to another side of the transmission body 310 opposite to a side of the transmission body on which the transmission cover is mounted, wherein a leaf spring is disposed on an inner surface of the ring stopper.

A radially outer surface of the latch body is provided with a plurality of second latch insertion grooves, and a ring gear latch is inserted into and arranged in the second latch insertion grooves, wherein a plurality of insertion grooves is formed on one radial side of the latch body, wherein a coil spring and a stop ring are fitted into the insertion grooves with the ring gear latch inserted and arranged in the second latch insertion grooves, and a change latch is disposed thereon, wherein a part of the leaf spring is fitted onto and surrounds the change latch.

### ADVANTAGEOUS EFFECTS

As described above, according to embodiments of the present invention, latch engagement parts, which have been disposed inside the transmission cover in conventional cases, are formed on a radially inner surface of a ring gear, latch insertion grooves and a gear tooth are formed on the outer surface of the sun gear, and the sun gear and a plurality of planetary gears are disposed in the ring gear together to support gear shift. The configured structure may be installed on the hub shaft of the rear wheel of the bicycle, thereby increasing the travel speed of the bicycle and the travel distance twice or more on average and enabling compact configuration of the bicycle wheels and the cranks. Thereby, a compact and lightweight bicycle may be realized.

### DESCRIPTION OF DRAWINGS

FIG. 1 is an exploded perspective view of an adjustable speed gear apparatus for a bicycle according to a preferred embodiment of the present invention;
FIG. 2 is a cross-sectional view illustrating the assembled state of the adjustable speed gear apparatus for a bicycle shown in FIG. 1;
FIG. 3 is a view illustrating operation of the adjustable speed gear apparatus for a bicycle shown in FIG. 1, showing operating of a first latch disposed on one radially outer surface of a sun gear; and
FIGS. 4 and 5 are views illustrating operation of the adjustable speed gear apparatus for a bicycle shown in FIG. 1, showing operation of a change latch disposed on a radially outer surface of a latch body.

### BEST MODE

Hereinafter, an adjustable speed gear apparatus for a bicycle according to a preferred embodiment of the present invention will be described in detail with reference to the accompanying drawings.

### MODE FOR INVENTION

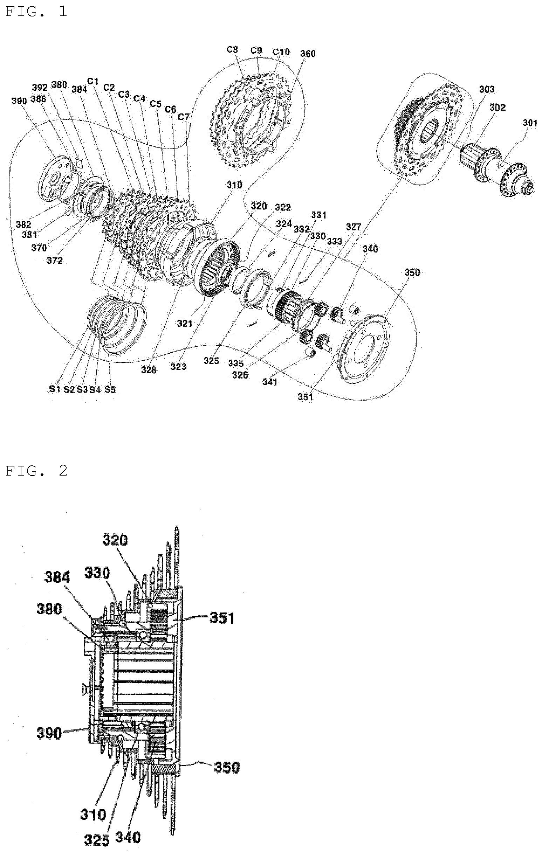

FIG. 1 shows an adjustable speed gear apparatus for a bicycle according to a preferred embodiment of the present invention.

Referring to FIG. 1, an adjustable speed gear apparatus 300 for a bicycle according to an embodiment includes a transmission body 310 fastened to and fixed to a male screw portion 302 of a hub shaft 301 on which a driving wheel of the bicycle is installed and formed in multiple stages to have a diameter decreasing in one direction, a ring gear 320 accommodated in the transmission body 310, a sun gear 330, a plurality of planetary gears 340 and a transmission cover 350 coupled to an outer side of the transmission body 310.

The ring gear 320 is formed in multiple stages to correspond to a shape of the transmission body 310 so as to be seated in the transmission body 310, a plurality of latch engagement parts 321 is formed on a central inner circumferential surface of the ring gear 320 and connected to each other so as to face in one direction like a toothed wheel, and a gear tooth 322 is formed on one inner circumferential surface of the ring gear 320 having a relatively large diameter.

A lock ring 323, a sun gear ring 324, a bearing 325, the sun gear 330, a first bearing ball 326 and the planetary gears 340 are disposed in the ring gear 320. The plurality of planetary gears 340 is disposed to be engaged with the gear tooth 322 in the ring gear 320 so as to revolve along a radial inner diameter of the ring gear 320, and the sun gear 330 is disposed at a center of the planetary gears 340 so as to be engaged with the planetary gears 340. The first bearing ball 326 is mounted on the outer surface of a bush ring 327, which is provided with a ball guide groove at a radially outer diameter thereof, in a rolling manner. On the radially outer surface of the ring gear 320, a second bearing ball 328 is mounted in a rolling manner.

The radially inner diameter of the sun gear 330 is provided with a female screw portion 335 to be screw-coupled with the male screw portion 302 of the hub shaft 301. A plurality of first latch insertion grooves 331 is formed on one radially outer surface of the sun gear 330. A first latch 332 and a first latch spring 333 are disposed in the first latch insertion grooves 331. The first latch 332 is inserted into and arranged in the latch insertion grooves 331 such that the first latch 332 is fixedly supported by the first latch spring 333.

The plurality of planet gears 340 is disposed on an outer circumference of the sun gear 330 so as to be engaged with the sun gear 330. A bearing needle 341 is disposed inside each of the planetary gears 340 and a planetary gear rotation shaft 351 protruding from one inner surface of the transmission cover 350 is inserted into the bearing needle 341.

A cog carrier 360 is mounted on the radially outer surface of the transmission body 310, a plurality of chain gears C1 to C10 having different diameters is disposed thereon and spacers S1 to S5 are disposed between the chain gears. The chain gears P1 to P10 are adapted to change speed by being selectively engaged with the chain from the driving gear in accordance with gear shift.

FIG. 2 shows an assembly view of an adjustable speed gear apparatus 300 for a bicycle according to a preferred embodiment of the present invention.

Referring to FIGS. 1 and 2, a latch body 380 and a ring stopper 390 are sequentially provided to another side of the transmission body 310 opposite to a side of the transmission body on which the transmission cover 350 is mounted. A leaf spring 392 is disposed on the inner surface of the ring stopper 390.

A radially outer surface of the latch body 380 is provided with a plurality of second latch insertion grooves 382, and a ring gear latch 384 is inserted into and arranged in the second latch insertion grooves 382. A plurality of insertion grooves 381 is formed on one radial side of the latch body 380. A coil spring 370 and a stop ring 372 are fitted into the insertion grooves 381 with the ring gear latch 384 inserted and arranged in the second latch insertion grooves 382. A change latch 386 is disposed thereon. A part of the leaf spring 392 is fitted onto and surrounds the change latch 386. A shaft insertion hole 391 is formed at and penetrates the center of the ring stopper 390, and a distal end portion 303 of the hub shaft 301 is inserted into the shaft insertion hole 391.

Hereinafter, operation of the adjustable speed gear apparatus 300 for a bicycle according to the preferred embodiment of the present invention configured as described above will be briefly described.

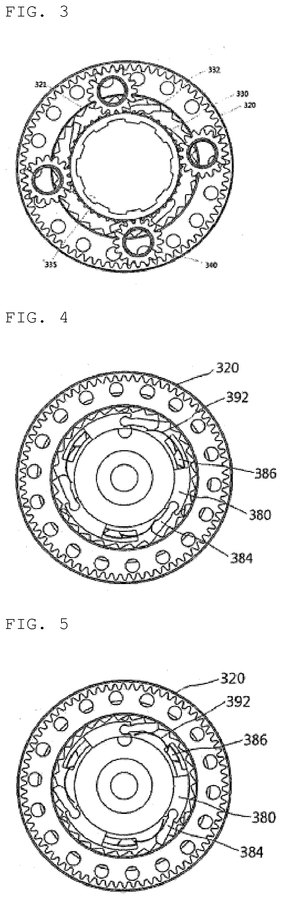

FIGS. 3 to 5 illustrate operation of the adjustable speed gear apparatus for a bicycle according to the preferred embodiment of the present invention configured as described above.

Referring to FIGS. 3 to 5, when a bicyclist starts to drive the bicycle, the bicycle hub shaft 301 is rotated by the organic action of the bicycle pedal and the arm. Thereby, the sun gear 330 coupled to the hub shaft 301 is rotated, the planetary gears 340 concentrically engaged with the sun gear 330 are also rotated, and the chain gears C1 to C10 mounted on the transmission body 310 are also driven to rotate.

Here, every time the driving chain gear on the pedal side rotates once, the sun gear 330 directly connected to the hub shaft 301 may gradually increase the speed of the driving wheel 3 times or more. The planetary gears 340 revolve around the ring gear 320 and transmit rotational power generated from the revolution to the sun gear 330 at a speed doubled so that the hub shaft 301 of the driving wheel coaxially connected to the sun gear 330 can rotate at a high speed.

More specifically, as shown in FIG. 3, when the user operates a shift lever to change the shift ratio of the bicycle to triple speed during forward rotation, the first latch 332 disposed on one side of the outer circumference of the sun gear 330 is resiliently fixed to the radially outer surface of the sun gear 330 by the first latch spring 333 and rotates counterclockwise while contacting the distal end portions of the latch engagement parts 321 having a wedge shape in a skimming manner without being engaged with any latch engagement parts 321. At this time, as shown in FIG. 5, the change latch 386 is moved, and the ring gear latch 384, which has been supported by an extension of the leaf spring 392, is lifted up and is caught by a latch engagement parts 321 formed in one direction on one radially inner surface of the ring gear 320. The latch engagement parts 321 formed on one radially inner surface of the ring gear 320 in one direction are formed to have a height increasing in the drive direction and decreasing in the reverse direction such that the ring gear 320 can rotate smoothly in the forward direction and fast driving at 2.8 to 3 times speed can be performed.

As shown in FIG. 4, when the user operates the shift lever during forward rotation to change the shift ratio of the bicycle to 1:1, the change latch 386 returns to the original position, and the ring gear latch 384 supported by the extension portion of the leaf spring 392 descends downward and is disengaged from the latch engagement part 321 formed on one radially inner surface of the ring gear 320 in one direction. Thereby, the ring gear latch 384 is rotated in the rotation direction of the ring gear 320. Then, the first latch 332 disposed on one side of the outer circumference of the sun gear 330 is engaged with a wedge-shaped latch engagement part 321 formed on one radially inner surface of the ring gear 320 in one direction, and pushes and rotates the planetary gears 320 while preventing the ring gear 320 and the sun gear 330 from rotating with respect to each other. Thereby, rotation at a rotation ratio of 1:1 is obtained.

When the user turns the pedal of the bicycle in the opposite direction, the first latch 322 is released outward by the first latch spring 333 and is firmly engaged with the latch engagement part 321. Thus, the ring gear 320 rotates in the reverse direction, and the ring gear 320 and the sun gear 330 prevent each other from rotating to push and rotate the planetary gears 340 to implement rotating at a rotation ratio of 1:1. Thereby, the ring gear 320 can be freely rotated in the forward or reverse direction, and the pedal can smoothly rotate without being stuck or impacted when the pedal is rotated in the forward direction or the reverse direction.

### INDUSTRIAL APPLICABILITY

While the present invention has been particularly shown and described with reference to preferred embodiments thereof, it will be apparent to those skilled in the art that various modifications and variations can be made in the present invention without departing from the spirit or scope of the inventions.

## Claims

1. An adjustable speed gear apparatus for a bicycle, comprising: a transmission body (310) fastened to and fixed to a male screw portion (302) of a hub shaft (301) on which a driving wheel of the bicycle is installed and formed in multiple stages to have a diameter decreasing in one direction, a ring gear (320) accommodated in the transmission body (310), a sun gear (330), a plurality of planetary gears (340) and a transmission cover (350) coupled to an outer side of the transmission body (310),
wherein the ring gear (320) is formed in multiple stages to correspond to a shape of the transmission body (310) so as to be seated in the transmission body (310), a plurality of latch engagement parts (321) is formed on a central inner circumferential surface of the ring gear (320) and connected to each other so as to face in one direction like a toothed wheel, and a gear tooth (322) is formed on one inner circumferential surface of the ring gear (320) having a relatively large diameter,
wherein the plurality of planetary gears (340) is disposed to be engaged with the gear tooth (322) so as to revolve along a radial inner diameter of the ring gear (320), and the sun gear (330) is disposed at a center of the planetary gears (340) so as to be engaged with the planetary gears (340),
wherein a plurality of first latch insertion grooves (331) is formed on one radially outer surface of the sun gear (330), wherein a first latch (332) and a first latch spring (333) are disposed in the first latch insertion grooves (331), and wherein the first latch (332) is disposed to be selectively engaged with the latch engagement parts (321) of the ring gear (320).

2. The adjustable speed gear apparatus according to claim 1, wherein a radially inner diameter of the sun gear (330) is provided with a female screw portion (335) to be screw-coupled with the male screw portion (302) of the hub shaft (301).

3. The adjustable speed gear apparatus according to claim 1 or 2, wherein a latch body (380) and a ring stopper (390) are sequentially provided to another side of the transmission body 310 opposite to a side of the transmission body on which the transmission cover (350) is mounted,
wherein a leaf spring (392) is disposed on an inner surface of the ring stopper (390).

4. The adjustable speed gear apparatus according to claim 3, wherein a radially outer surface of the latch body (380) is provided with a plurality of second latch insertion grooves (382), and a ring gear latch (384) is inserted into and arranged in the second latch insertion grooves (382),
wherein a plurality of insertion grooves (381) are formed on one radial side of the latch body (380),
wherein a coil spring (370) and a stop ring (372) are fitted into the insertion grooves (381) with the ring gear latch (384) inserted and arranged in the second latch insertion grooves (382), and a change latch (386) is disposed thereon,
wherein a part of the leaf spring (392) is fitted onto and surrounds the change latch (386).
